Europäisches Patentamt

European Patent Office

Office européen des brevets

(19)

(11) Publication number: **0 009 270**
**B1**

(12) **EUROPEAN PATENT SPECIFICATION**

(45) Date of publication of patent specification: **25.05.83**

(51) Int. Cl.³: **A 47 J 31/40**

(21) Application number: **79200476.4**

(22) Date of filing: **29.08.79**

(54) **Method and apparatus for preparing beverages from powdered concentrates.**

(30) Priority: **01.09.78 NL 7809019**

(43) Date of publication of application:
**02.04.80 Bulletin 80/7**

(45) Publication of the grant of the patent:
**25.05.83 Bulletin 83/21**

(84) Designated Contracting States:
**AT BE CH DE FR GB IT LU NL SE**

(56) References cited:
**GB - A - 1 006 191**
**US - A - 2 954 145**
**US - A - 3 300 094**
**US - A - 3 446 399**

(73) Proprietor: **Douwe Egberts Koninklijke Tabaksfabriek- Koffiebranderijen-Theehandel N.V.**
**Keulsekade 143**
**NL-3532 AA Utrecht (NL)**

(72) Inventor: **De Wilt, Hendricus Gijsbertus Joannes**
**Kerkplein 17**
**NL-5301 EK Zaltbommel (NL)**

(74) Representative: **Urbanus, Henricus Maria, Ir. et al,**
**c/o Vereenigde Octrooibureaux Nieuwe Parklaan 107**
**NL-2587 BP 's-Gravenhage (NL)**

Courier Press, Leamington Spa, England.

Method and apparatus for preparing beverages from powdered concentrates.

In dosing beverages in beverage making machines, use can be made of both liquid and dry, powdered concentrates. The powdered concentrates have the great advantage that, so long as they remain dry, bacteria cannot develop therein. Preservatives are unnecessary. They have the additional advantage of cheap storage, transportation and handling. Normally, the powders are first metered by a powder dosing device to a mixing device and dissolved therein with a portion of the total quantity of water to be used in the portion of beverage. This resulting solution is supplied to a drinking cup, while the remainder of the water is directly metered to the drinking cup.

In particular in the preparation of cold beverages (such as soft drinks and possibly also alcohol-containing drinks, such as beer) the quick dissolving forms a problem. In order to make it possible for the material to be dissolved rapidly it is of importance that fine powders are used. Quick dissolving is in particular also of importance in those cases in which carbonated water is used. This is because the solid particles serve as nuclei for the generation of carbon dioxide gas (so that the carbon dioxide content of the ready beverage deteriorates) and therefore must disappear as fast as possible. The ready dissolving is also of importance to prevent "caking" in the apparatus. Fine powders, however, have the disadvantage of "dusting". The outlet opening of the powder dosing device can be placed over the mixing device, so that the quantities dosed by this dosing device fall into the mixing device. The dusting of the fine powder entails that this spreads throughout the remainder of the machine. If the interior of the machine is protected against this dusting by providing a "cap" which surrounds the outlet opening of the powder dosing device, as well as the opening of the mixing device into which the powder falls, then the powder will adhere to the walls of this cap. In both cases there is the risk of "caking" to the wall, in particular also at the line of separation between the water supplied into the mixing device and the air. This is objectionable, in particular from a hygienic point of view (bacterial growth in powder becoming moist).

The present invention relates to a method of preparing beverages in beverage making machines from powdered concentrates, in which the powder is metered by a powder dosing device to an open-topped mixing device disposed under said powder dosing device, in which mixing device the powder is dissolved in water supplied to the mixing device, while furthermore there is provided a stream of air which entrains all the powder particles leaving the outlet opening of the powder dosing device through the mixing device. In U.S. patent 3,300,094 such a method is described. However, there the powder is not in its totality mixed with the water. The walls of the space are not all washed by the water, and as not all the powder, especially fine powder, is entrained by the air, this will tend to settle on these walls.

Due to the invention the method is characterized in that the stream of air leaves the mixing device together with the prepared solution after having been intimately mixed in its totality with that solution, such that the powder carried by the air is in its totality absorbed by the water, and further that, from the place where the powder first touches the mixing device, all interior parts of said mixing device are washed by the water supplied. Also U.S. patent 3,446,399 describes a method for preparing beverages in a beverage making machine. Here, however, also adhering of the powder is possible to the wall of the chute and the walls of the mixing bowl. Besides that it is clear that a part of the powder can be entrained through the suction conduit.

The method of the invention is further characterized in that the opening of the mixing device is disposed under the outlet opening of the powder dosing device, that in said mixing device a sub-atmospheric pressure is maintained, and that the distance of the outlet opening of the powder dosing device to the opening of the mixing device, on the one hand, and the sub-atmospheric pressure, on the other, are so attuned to each other that all the powder issuing from the outlet opening is sucked into the mixing device.

Powder with a particle size of 0.2 mm and finer can be used.

When the method is applied to carbonated beverages, then the powder is first mixed with a quantity of non-carbonated water before carbonated water is supplied.

The invention further relates to an apparatus for preparing beverages from powdered concentrates in beverage making machines comprising a device suitable for generating a stream of air between the outlet opening of the powder dosing device and a mixing device disposed below the powder dosing device, so that all the powder issuing metered from the outlet opening is entrained by said stream of air through the mixing device where it is mixed with water. This apparatus is characterized by an open-topped mixing device for the intimate mixing of powder, and by means such that the stream of air is discharged from the mixing device together with the prepared solution after having been intimately mixed in its totality with that solution, such that the powder carried by the air is in its totality absorbed by the water, and further that, from the place where the powder first touches the mixing device, all interior parts of said mixing device are washed by the water supplied. The device for generating the stream of air and mixing the powder in its totality with the solution can be a centrifugal pump.

Further the mixing chamber can have a frusto-conical shape, the axis of which is perpendicular to the axis of the connecting tube.

One example of the apparatus according to the invention and its operation are shown in the accompanying Figures 1, 2 and 3, in which

Figure 1 is a longitudinal sectional view of the apparatus;

Figure 2 is a second longitudinal sectional view, at right angles to the section of Figure 1, and taken on the line II—II' of Figure 1; and

Figure 3 is a graphic representation of a programme for a carbonated beverage.

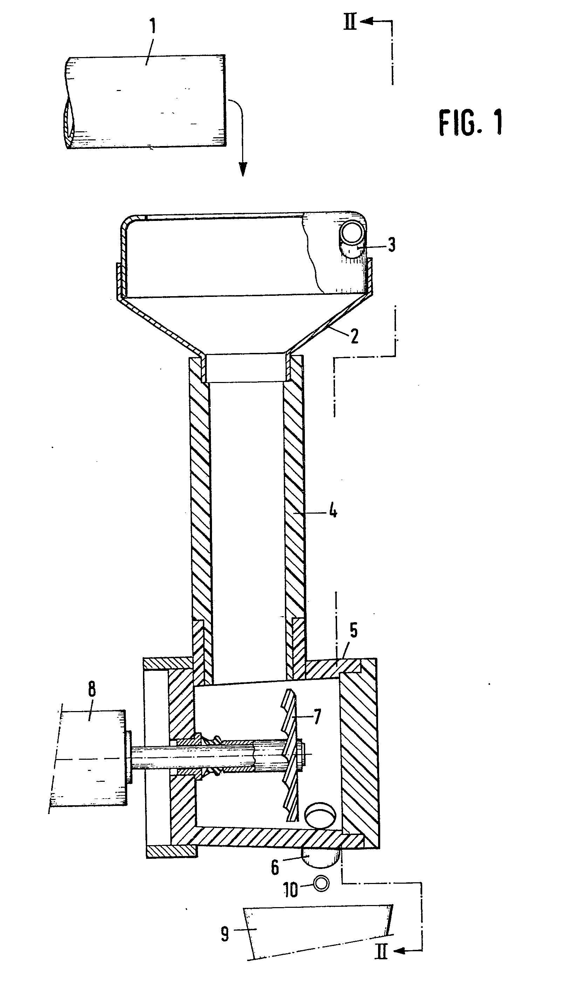

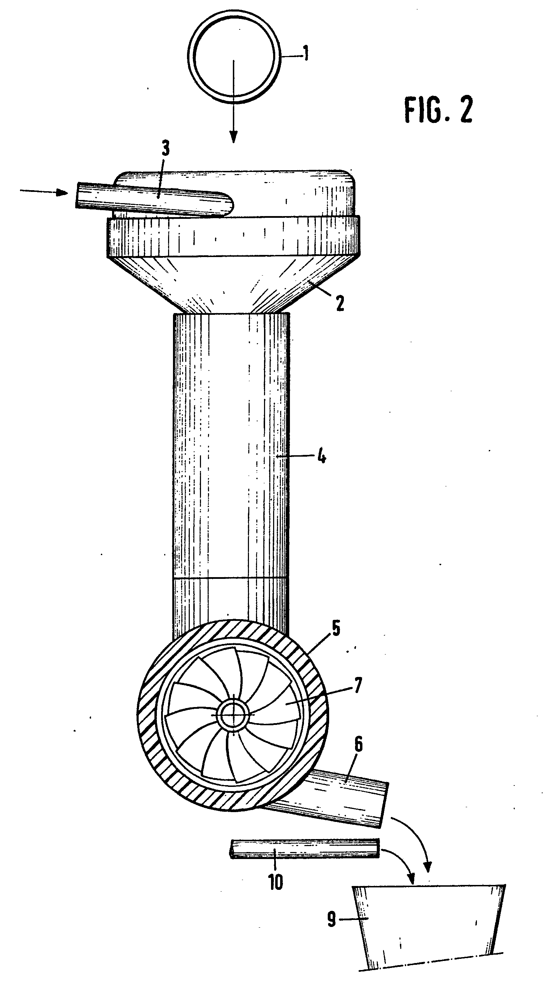

Designated by 1 is the outlet tube of a powder dosing device. The powder falls into a funnel-shaped receptacle 2. Water is supplied in a powerful jet via a tangentially directed tube 3, and moves helically along the wall of receptacle 2 to a downcomer tube 4, along the inner wall of which it moves, also helically, to a mixing chamber 5. Via 6 the liquid leaves the mixing chamber 5 sideways. Chamber 5 is of conical configuration to facilitate its draining completely. The mixing chamber 5 is provided with a centrifugal stirrer 7, which is driven by a motor 8. The stirrer 7 consists of 16 blades of the shape shown in Figure 2, mounted on a shaft. The blades are curved up to their ends. At fast rotation, in this case approximately 9000 rpm, sufficient air is drawn through downcomer tube 4 to generate a sub-atmospheric pressure in receptacle 2. Furthermore, the stirrer ensures that the powder is fully dissolved. The sub-atmospheric pressure ensures that the fine powder metered from outlet tube 1 is drawn into the receptacle and downcomer tube, and dusting is prevented. A drinking cup 9 is shown diagrammatically in Figures 1 and 2, and so is the supply of replenishing water at 10.

The programme for each filling is performed after the machine has been put to operation. This, and the control of the programme, are effected electrically by methods well known in the art.

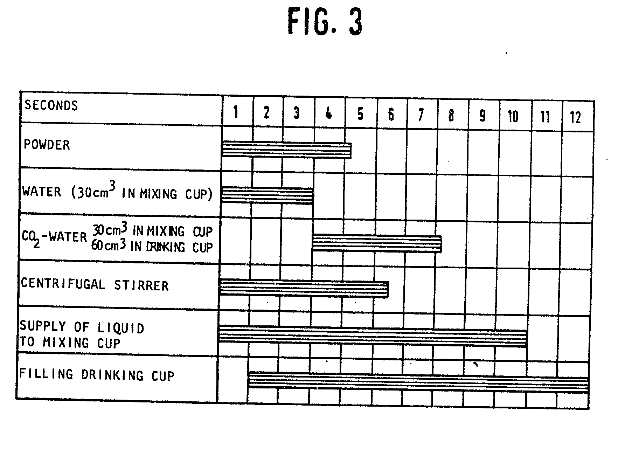

In the table shown in Figure 3, a programme is illustrated for a carbonated beverage. The use of non-carbonated water for preparing a presolution of the powder before the carbonated water is supplied, although normally desirable, is not required in all cases, if some loss of carbon dioxide is accepted.

## Claims

1. A method for preparing beverages in beverage making machines from powdered concentrates, in which the powder is metered by a powder dosing device to an open-topped mixing device (2—7) disposed under said powder dosing device, in which mixing device the powder is dissolved in water supplied to the mixing device, while furthermore there is provided a stream of air which entrains all the powder particles leaving the outlet opening (1) of the powder dosing device through the mixing device, characterized in that the stream of air leaves the mixing device together with the prepared solution after having been intimately mixed in its totality with that solution, such that the powder carried by the air is in its totality absorbed by the water, and further that, from the place where the powder first touches the mixing device, all interior parts of said mixing device are washed by the water supplied.

2. A method as claimed in claim 1, characterized in that the opening of the mixing device is disposed under the outlet opening of the powder dosing device, that in said mixing device a sub-atmospheric pressure is maintained, and that the distance of the outlet opening of the powder dosing device to the opening of the mixing device, on the one hand, and the sub-atmospheric pressure, on the other, are so attuned to each other that all the powder issuing from the outlet opening is sucked into the mixing device.

3. A method as claimed in claim 1 or 2, characterized in that powders with a particle size of 0.2 mm and finer are used.

4. A method as claimed in claim 3, applied to carbonated beverages, characterized in that the powder is first mixed with a quantity of non-carbonated water before carbonated water is supplied.

5. Apparatus for preparing beverages from powdered concentrates in beverage making machines, comprising a device suitable for generating a stream of air between the outlet opening (1) of the powder dosing device and a mixing device (2—10) disposed below the powder dosing device, so that all the powder metered from the outlet opening is entrained by said stream of air through the mixing device where it is mixed with water, characterized by an open-topped mixing device (2—7) for the intimate mixing of powder, and by means such that the stream of air is discharged from the mixing device together with the prepared solution after having been intimately mixed in its totality with that solution, such that the powder carried by the air is in its totality absorbed by the water, and further that, from the place where the powder first touches the mixing device, all interior parts of said mixing device are washed by the water supplied.

6. Apparatus as claimed in claim 5, in which the device for generating the stream of air is a centrifugal pump (7).

7. Apparatus as claimed in claim 5 or 6, in which the device for generating the stream of air and mixing the powder in its totality with the solution is a centrifugal pump (7).

8. Apparatus as claimed in claim 5, 6 or 7, in which the mixing chamber (5) has a frusto-conical shape, the axis of which is perpendicular to the axis of the connecting tube (4).

## Patentansprüche

1. Verfahren für die Bereitung von Getränken in Getränkeautomaten aus pulverförmigen Konzentraten, bei dem das Pulver durch eine Dosiervorrichtung in eine oben offene Mischvorrichtung (2—7) eingemessen wird, die unter der Pulverdosiervorrichtung angeordnet ist, wobei das Pulver in der Mischvorrichtung in Wasser gelöst wird, das in die Mischvorrichtung zugegeben wird, während weiterhin ein Luftstrom vorgesehen ist, welcher alle Pulverteilchen mitreisst, welche die Auslassöffnung (1) der Pulverdosiervorrichtung durch die Mischvorrichtung verlassen, dadurch gekennzeichnet, dass der Luftstrom die Mischvorrichtung zusammen mit der vorbereiteten Lösung verlässt, nachdem er in seiner Gesamtheit mit dieser Lösung sorgfältig vermischt wurde, so dass das von der Luft mitgerissene Pulver vollkommen von dem Wasser absorbiert wird, und dass weiterhin von der Stelle an, an der das Pulver zum ersten Mal die Mischvorrichtung berührt, alle inneren Teile der Mischvorrichtung durch das zugegebene Wasser gespült werden.

2. Verfahren nach Anspruch 1, dadurch gekennzeichnet, dass die Öffnung der Mischvorrichtung unter der Auslassöffnung der Pulverdosiervorrichtung angeordnet ist, dass in dieser Mischvorrichtung ein Unterdruck aufrecht erhalten wird und dass der Abstand zwischen der Auslassöffnung der Pulverdosiervorrichtung zur Öffnung der Mischvorrichtung einerseits und dem Unterdruck andererseits so abgestimmt ist, dass das gesamte aus der Auslassöffnung abgegebene Pulver in die Mischvorrichtung eingesogen wird.

3. Verfahren nach einem der Ansprüche 1 oder 2, dadurch gekennzeichnet, dass Pulver mit einer Teilchengrösse von 0,2 und weniger verwendet werden.

4. Verfahren nach Anspruch 3 für kohlesäurehaltige Getränke, dadurch gekennzeichnet, dass das Pulver zuerst mit einer Menge von kohlesäurefreiem Wasser vermengt wird, bevor kohlesäurehaltiges Wasser zugegeben wird.

5. Vorrichtung für die Bereitung von Getränken aus pulverförmigen Konzentraten in Getränkeautomaten mit einer Vorrichtung, die geeignet ist, einen Luftstrom zwischen der Auslassöffnung (1) der Pulverdosiervorrichtung und einer Mischvorrichtung (2—10) zu bilden, die unter der Pulverdosiervorrichtung angeordnet ist, so dass das gesamte aus der Auslassöffnung abgemessen abgegebene Pulver durch diesen Luftstrom durch die Mischvorrichtung gesogen wird, wo es mit Wasser vermischt wird, dadurch gekennzeichnet, dass eine oben offene Mischvorrichtung (2—7) für die sorgfältige Vermischung des Pulvers vorgesehen ist, sowie durch Mittel, die so ausgelegt sind, dass der Luftstrom aus der Mischvorrichtung zusammen mit der vorbereiteten Lösung abgegeben wird, nachdem er in seiner Gesamtheit sorgfältig mit dieser Lösung vermischt wurde, so dass das durch die Luft mitgerissene Pulver in seiner Gesamtheit von dem Wasser absorbiert wird und dass weiterhin von der Stelle an, an der das Pulver zum ersten Mal die Mischvorrichtung berührt, alle Innenteile der Mischvorrichtung von dem zugegebenen Wasser gespült werden.

6. Vorrichtung nach Anspruch 5, in der die Vorrichtung für die Erzeugung des Luftstroms eine Kreiselpumpe (7) ist.

7. Vorrichtung nach einem der Ansprüche 5 oder 6, in der die Vorrichtung für die Erzeugung des Luftstroms und die gesamte Vermischung des Pulvers mit der Lösung eine Kreiselpumpe (7) ist.

8. Vorrichtung nach einem der Ansprüche 5, 6 oder 7, in der die Mischkammer (5) eine stumpfkegelige Form hat, deren Achse rechtwinklig zu der Achse der Verbindungsrohres (4) verläuft.

## Revendications

1. Procédé destiné à la préparation de boissons dans des machines à préparer des boissons à partir de concentrés en poudre, selon lequel la poudre est délivrée en quantité mesurée par un dispositif de dosage de poudre à un dispositif de mélange à dessus ouvert (2—7) disposé sous ledit dispositif de dosage de poudre, et dans lequel la poudre est dissoute dans de l'eau amenée au dispositif de mélange, tandis que de plus un courant d'air entraîne dans le dispositif de mélange toutes les particules de poudre qui quittent l'ouverture de sortie (1) du dispositif de dosage de poudre, caractérisé en ce que le courant d'air quitte le dispositif de mélange en même temps que la solution préparée, après avoir été mélangé intimement en totalité avec cette solution, de sorte que la poudre portée par l'air est en totalité absorbée par l'eau, et que de plus, à partir de l'endroit où la poudre entre pour la première fois en contact avec le dispositif de mélange, toutes les parties internes dudit dispositif de mélange sont lavées par l'eau qui est amenée.

2. Procédé selon la revendication 1, caractérisé en ce que l'ouverture du dispositif de mélange est disposée sous l'ouverture de sortie du dispositif de dosage de poudre, en ce qu'une pression inférieure à la pression atmosphérique est maintenue dans ledit dispositif de mélange, et en ce que la distance entre l'ouverture de sortie du dispositif de dosage de poudre et l'ouverture du dispositif de mélange, d'une part, et la pression inférieure à la pression atmosphérique, d'autre part, sont ainsi harmonisées l'une avec l'autre que toute la poudre qui sort de l'ouverture de sortie est aspirée dans le dispositif de mélange.

3. Procédé selon l'une des revendications 1 et 2, caractérisé en ce que l'on utilise des poudres ayant une taille de particules de 0,2 mm ou plus fines encore.

4. Procédé selon la revendication 3, appliqué à des boissons gazeuses, caractérisé en ce que la poudre est toute d'abord mélangée avec une quantité d'eau non gazeuse avant que l'eau gazeuse ne soit amenée.

5. Appareil destiné à la préparation de boissons à partir de concentrés en poudre dans des machines à préparer des boissons, comprenant un dispositif destiné à produire un courant d'air entre l'ouverture de sortie (1) du dispositif de dosage de poudre et un dispositif de mélange (2—10) disposé sous le dispositif de dosage de poudre, de sorte que toute la poudre délivrée en quantité mesurée par l'ouverture de sortie est entraînée par ledit courant d'air dans le dispositif de mélange, où elle est mélangée avec de l'eau, caractérisé par un dispositif de mélange (2—7) à dessus ouvert destiné au mélange intime de la poudre, et par des moyens tels que le courant d'air est déchargé du dispositif de mélange en même temps que la solution préparée, après avoir été intimement mélangé en totalité avec cette solution, de sorte que la poudre portée par l'air est en totalité absorbée par l'eau, et de plus qu'à partir de l'endroit où la poudre entre pour la première fois en contact avec le dispositif de mélange, toutes les parties internes dudit dispositif de mélange sont lavées par l'eau qui est amenée.

6. Appareil selon la revendication 5, dans lequel le dispositif destiné à produire le courant d'air est une pompe centrifuge (7).

7. Appareil selon l'une des revendications 5 et 6, dans lequel le dispositif destiné à produire le courant d'air et à mélanger la poudre en totalité avec la solution est une pompe centrifuge (7).

8. Appareil selon l'une des revendications 5, 6 et 7, dans lequel la chambre de mélange (5) a une forme tronconique, dont l'axe est perpendiculaire à l'axe du tube de liaison (4).

0 009 270

FIG. 1

FIG. 2

# FIG. 3

| SECONDS | 1 | 2 | 3 | 4 | 5 | 6 | 7 | 8 | 9 | 10 | 11 | 12 |
|---|---|---|---|---|---|---|---|---|---|---|---|---|
| POWDER | ▬▬▬ | ▬▬ | ▬ | ▬ | | | | | | | | |
| WATER (30cm³ IN MIXING CUP) | ▬▬▬ | ▬▬ | ▬ | | | | | | | | | |
| $CO_2$-WATER $\begin{array}{l}30\,cm^3\ IN\ MIXING\ CUP\\60\,cm^3\ IN\ DRINKING\ CUP\end{array}$ | | | | ▬▬ | ▬ | ▬ | ▬ | ▬ | | | | |
| CENTRIFUGAL STIRRER | ▬▬ | ▬ | ▬ | ▬ | ▬ | | | | | | | |
| SUPPLY OF LIQUID TO MIXING CUP | ▬ | ▬ | ▬ | ▬ | ▬ | ▬ | ▬ | ▬ | ▬ | ▬ | | |
| FILLING DRINKING CUP | | ▬ | ▬ | ▬ | ▬ | ▬ | ▬ | ▬ | ▬ | ▬ | ▬ | ▬ |